# EUROPEAN PATENT APPLICATION

(11) **EP 3 015 304 A1**
(43) Date of publication of application: **04.05.2016**
(21) Application number: 15191995.8
(22) Date of filing: 29.10.2015
(51) Int. Cl.: B60K 15/04

(54) **FUEL TANK FILLER STRUCTURE**

(30) Priority: 31.10.2014 JP 2014223335
(71) Applicant: Toyota Jidosha Kabushiki Kaisha, Toyota-shi, Aichi-ken 471-8571 (JP)
(72) Inventor: ASO, Shuichi, TOYOTA-SHI, AICHI-KEN, 471-8571 (JP)
(74) Representative: Intès, Didier Gérard André

(57) **Abstract**

A fuel tank filler structure (20) has: a filler pipe (24) that is equipped with a filler inlet (24A) into which a fuel nozzle (100) is inserted, the filler pipe (24) being communicated with a fuel tank (22); an opening and closing valve (50) that is disposed in the filler pipe (24), closes off the filler inlet (24A), and, when pushed by the fuel nozzle (100), opens the filler inlet (24A); and a projecting portion (60, 70) that is disposed on the opening and closing valve (50), projects toward an opposite side from an insertion direction (X) of the fuel nozzle (100), is exposed from the filler inlet (24A), and is equipped with a sloping surface (62, 72) that extends from a projecting distal end portion (60B, 70B) toward a base portion (60A, 70A) and slopes relative to the insertion direction (X) of the fuel nozzle (100).

## Description

### BACKGROUND

### Technical Field

The present invention relates to a fuel tank filler structure.

### Related Art

Japanese Patent Application Laid-open (JP-A) No. 2012-144152 discloses a filler structure wherein an opening and closing valve is disposed in a filler inlet of a filler pipe for fueling a fuel tank. The opening and closing valve opens the filler inlet when it is pushed by a fuel nozzle.

In the filler structure disclosed in JP-A No. 2012-144152, if, after fueling, one forgets to close the fuel lid covering the filler inlet and washes the car, there is the concern that sprayed water will strike and push open the opening and closing valve.

### SUMMARY

In view of this circumstance, it is an object of an aspect of the present invention to provide a fuel tank filler structure in which it is difficult for an opening and closing valve to be opened even if sprayed water strikes the opening and closing valve when washing the car.

A fuel tank filler structure of a first aspect of the present has: a filler pipe that is equipped with a filler inlet into which a fuel nozzle is inserted, the filler pipe being communicated with a fuel tank; an opening and closing valve that is disposed in the filler pipe, closes off the filler inlet, and, when pushed by the fuel nozzle, opens the filler inlet; and a projecting portion that is disposed on the opening and closing valve, projects toward an opposite side from an insertion direction of the fuel nozzle, is exposed from the filler inlet, and is equipped with a sloping surface that extends from a projecting distal end portion toward a base portion and slopes relative to the insertion direction of the fuel nozzle.

In the fuel tank filler structure of the first aspect, the projecting portion exposed from the filler inlet is disposed on the opening and closing valve, and the projecting portion is equipped with the sloping surface that extends from the projecting distal end portion toward the base portion and slopes relative to the insertion direction of the fuel nozzle. Here, if, when washing the car, sprayed water strikes the sloping surface of the projecting portion exposed from the filler inlet, the pressure of the water in the insertion direction of the fuel nozzle is dispersed in other directions by the sloping surface. Because of this, it is difficult for the opening and closing valve to be opened even if the sprayed water strikes it.

A fuel tank filler structure of a second aspect of the present is the fuel tank filler structure of the first aspect, wherein an entire surface on the projecting distal end portion side of the projecting portion is formed by the sloping surface.

In the fuel tank filler structure of the second aspect, the entire surface on the projecting distal end portion side of the projecting portion is formed by the sloping surface, so it is even more difficult for the opening and closing valve to be opened even if the sprayed water strikes it.

A fuel tank filler structure of a third aspect of the present is the fuel tank filler structure of the second aspect, wherein the projecting distal end portion is disposed in a central portion of the projecting portion and in a central portion of the filler inlet, as seen from the insertion direction of the fuel nozzle.

In the fuel tank filler structure of the third aspect, the projecting distal end portion of the projecting portion is disposed in the central portion of the projecting portion and in the central portion of the filler inlet, as seen from the insertion direction of the fuel nozzle. For this reason, the sprayed water can be dispersed substantially evenly along the sloping surface of the projecting portion to the periphery of the filler inlet.

The fuel tank filler structure of the aspect of the present invention has the superior effect that it is difficult for the opening and closing valve to be opened even if sprayed water strikes the opening and closing valve when washing the car.

### BRIEF DESCRIPTION OF THE DRAWINGS

Exemplary embodiments of the present invention will be described in detail based on the following figures, wherein:
FIG. 1 is a schematic configuration diagram of a fuel tank to which a fuel tank filler structure of an embodiment of the present invention has been applied;
FIG. 2 is a cross-sectional view along an axial direction of a filler pipe used in the fuel tank filler structure of the embodiment of the present invention;
FIG. 3 is a front view of a filler inlet of the filler pipe of FIG. 2 as seen from the insertion direction of a fuel nozzle;
FIG. 4 is a cross-sectional view, corresponding to the section indicated by arrow 4 of FIG. 2, showing a state in which sprayed water is striking a projecting portion of an outside cover of FIG. 2;
FIG. 5 is an enlarged view in which part of FIG. 4 is enlarged, and shows the directions of forces acting on the projecting portion in the state in which sprayed water is striking the projecting portion of the outside cover of FIG. 4;
FIG. 6 is a cross-sectional view corresponding to FIG. 4 showing a first example modification of the projecting portion of the embodiment of the present invention; and
FIG. 7 is a front view corresponding to FIG. 3 showing the first example modification of FIG. 6.

### DETAILED DESCRIPTION OF THE INVENTION

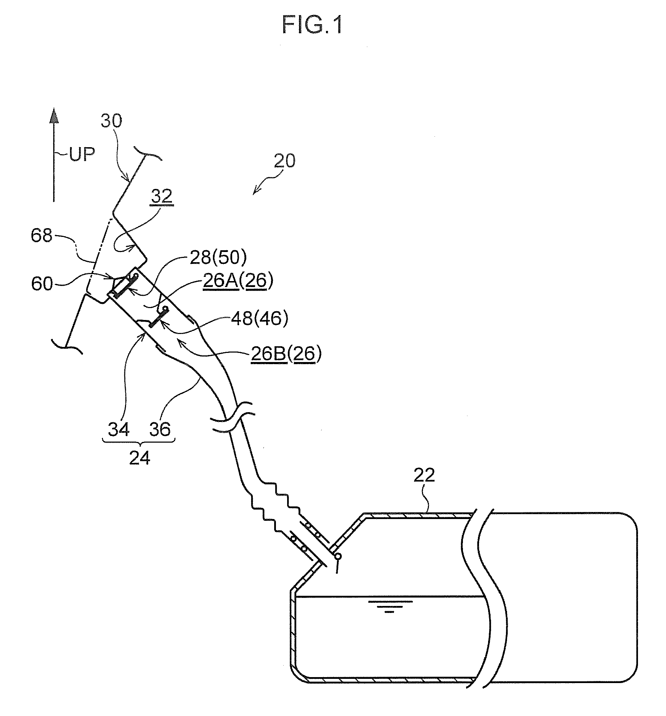

A fuel tank filler structure (hereinafter simply called "the filler structure") 20 of an embodiment of the present invention will be described below with reference to FIG. 1 to FIG. 5. It should be noted that arrow UP appropriately shown in these drawings indicates a vehicle upward direction and that arrow X indicates an insertion direction of a later-described fuel nozzle 100 (hereinafter this direction will simply be called "the nozzle insertion direction").

As shown in FIG. 1, the filler structure 20 of the present embodiment has a filler pipe 24 and an outside cover 28. The filler pipe 24 is equipped with a filler inlet 24A into which the fuel nozzle 100 is inserted. Furthermore, the filler pipe 24 is communicated with a fuel tank 22 and delivers to the fuel tank 22 fuel supplied from the fuel nozzle 100. The outside cover 28 is disposed in a flow path 26 in the filler pipe 24, closes off the filler inlet 24A, and, when it is pushed by the distal end portion of the fuel nozzle 100, opens the filler inlet 24A. It should be noted that the filler pipe 24 of the present embodiment is an example of a filler pipe of the present invention and that the outside cover 28 of the present embodiment is an example of an opening and closing valve of the present invention.

Furthermore, in the present embodiment, when the phrase "near side" is simply used, this will be understood to mean the near side of the filler pipe 24, or in other words the filler inlet 24A side, and when the phrase "far side" is used, this will be understood to mean the far side of the filler pipe 24, or in other words the fuel tank 22 side. Furthermore, when the phrase "radial direction" is simply used, this will be understood to mean the radial direction of the filler pipe 24, and when the phrase "axial direction" is used, this will be understood to mean the axial direction of the filler pipe 24.

The upper end portion of the filler pipe 24 is attached to the bottom portion of a recessed portion 32, which is formed in an outer panel configuring a vehicle body 30 and is recessed inward relative to the vehicle body 30. Furthermore, the lower end portion of the filler pipe 24 is connected to the upper portion of the fuel tank 22.

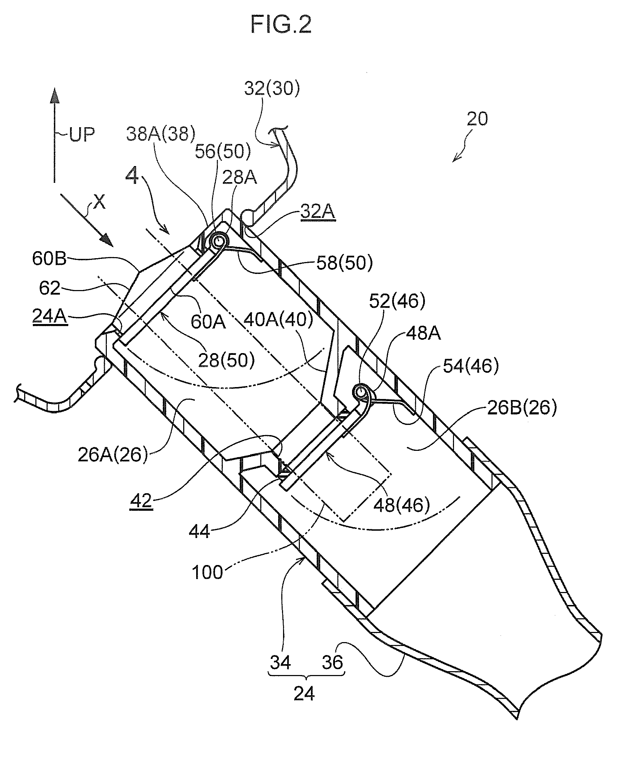

As shown in FIG. 2, the filler pipe 24 is equipped with a cylindrical filler inlet member 34 and a cylindrical pipe body 36. The filler inlet member 34 configures the filler inlet 24A and is attached to the bottom portion of the recessed portion 32. The pipe body 36 has the filler inlet member 34 attached to its upper end portion (the near-side end portion), and the lower end portion (the far-side end portion) of the pipe body 36 is connected to the fuel tank 22.

The filler inlet member 34 is attached to the bottom portion of the recessed portion 32 in a state in which the filler inlet member 34 is inserted into an attachment hole 32A formed in the bottom portion of the recessed portion 32, and the near-side end portion (the upper end portion in FIG. 1 and FIG. 2) of the filler inlet member 34 is placed in the recessed portion 32. Furthermore, an annular jutting portion 38 that juts inward in the radial direction is formed on the near-side end portion of the filler inlet member 34. A circular opening formed inside the jutting portion 38 is the filler inlet 24A.

A substantially cylindrical tube portion 40 having a shape whose inner diameter is gradually reduced heading from the near side toward the far side is formed in the axial direction intermediate portion (in the present embodiment, near the central portion) of the filler inlet member 34. An opening 42 formed in the far-side end portion of the tube portion 40 is slightly larger in diameter than the nozzle diameter of the fuel nozzle 100. Because of the tube portion 40, when the fuel nozzle 100 is inserted from the filler inlet 24A into the tube portion 40, the distal end portion of the fuel nozzle 100 comes into contact with an inner peripheral surface 40A of the tube portion 40 and is guided to the opening 42.

Furthermore, an annular rubber seal 44 is attached to the rim of the opening 42 in the tube portion 40 (in the present embodiment, the far-side end surface of the tube portion 40) along the rim.

A first opening and closing portion 46 for opening and closing the opening 42 is disposed in the filler inlet member 34. The opening 42 is closed off by a flapper valve 48 configuring the first opening and closing portion 46.

Furthermore, a second opening and closing portion 50 for opening and closing the filler inlet 24A is disposed in the filler inlet member 34 on the near side of the first opening and closing portion 46. The filler inlet 24A is closed off by the outside cover 28 configuring the second opening and closing portion 50.

For this reason, the flow path 26 in the filler pipe 24 is configured to include a first flow path 26A from the outside cover 28 to the flapper valve 48 and a second flow path 26B from the flapper valve 48 to the fuel tank 22.

As shown in FIG. 2 the first opening and closing portion 46 is equipped with the flapper valve 48, a spindle 52, and a biasing spring 54. The flapper valve 48 is substantially circular, formed in the shape of a flat plate, and is larger in diameter than the opening 42 in the tube portion 40. In a state in which the flapper valve 48 is closed (hereinafter appropriately called "the closed state"), the near-side surface of the flapper valve 48 is in contact with the rubber seal 44 so that the space between the tube portion 40 and the flapper valve 48 is sealed.

A pair of bearing portions 48A are disposed on the end portion of the flapper valve 48.

The spindle 52, which rotatably supports the flapper valve 48, is inserted through these bearing portions 48A. The spindle 52 is rotatably supported by a non-illustrated pair of bearing portions disposed in the filler inlet member 34. For this reason, the opening 42 is opened and closed when the flapper valve 48 is rotated about the spindle 52. Furthermore, the biasing spring 54 is wound around the spindle 52. The biasing spring 54 biases the flapper valve 48 in the closing direction. For the biasing spring 54 of the present embodiment, a torsion coil spring, for example, is used. Here, when the flapper valve 48 is pushed by a force greater than the biasing force of the biasing spring 54, the flapper valve 48 rotates about the spindle 52 counter to the biasing force of the biasing spring 54 so that the opening 42 is opened.

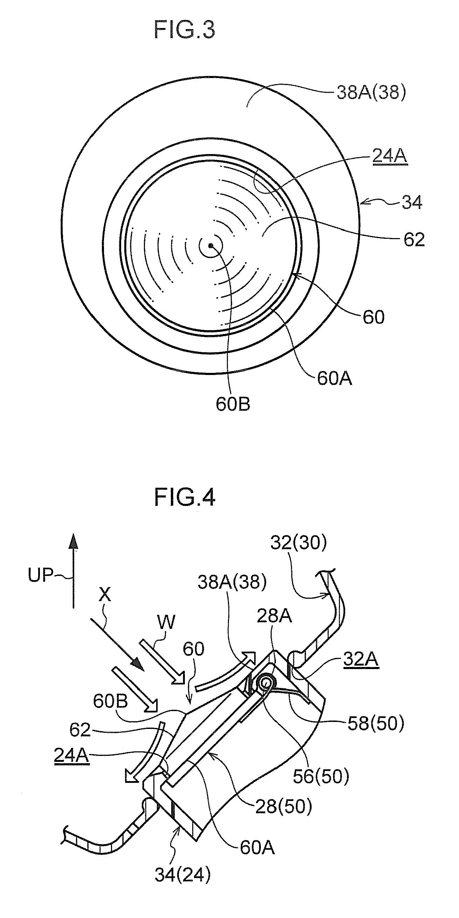

The second opening and closing portion 50 is equipped with the outside cover 28, a spindle 56, and a biasing spring 58. The outside cover 28 is substantially circular, formed in the shape of a flat plate, and is larger in diameter than the filler inlet 24A. Furthermore, the diameter of the outside cover 28 is formed larger than the diameter of the filler inlet 24A, so that in a state in which the outside cover 28 is closed as shown in FIG. 2 and FIG. 3, the outer peripheral edge portion of the outside cover 28 and the rim of the filler inlet 24A are in contact with one another.

A pair of bearing portions 28A are disposed on the end portion of the outside cover 28. The spindle 56, which rotatably supports the outside cover 28, is inserted through these bearing portions 28A. The spindle 56 is rotatably supported by a non-illustrated pair of bearing portions disposed in the filler inlet member 34. For this reason, the filler inlet 24A is opened and closed when the outside cover 28 is rotated about the spindle 56. Furthermore, the biasing spring 58 is wound around the spindle 56. The biasing spring 58 biases the outside cover 28 in the closing direction. For the biasing spring 58 of the present embodiment, a torsion coil spring, for example, is used. Here, when the outside cover 28 is pushed by a force greater than the biasing force of the biasing spring 58, the outside cover 28 rotates about the spindle 56 counter to the biasing force of the biasing spring 58 so that the filler inlet 24A is opened.

Furthermore, as shown in FIG. 2 to FIG. 4, a projecting portion 60 is disposed on the outside cover 28. The projecting portion 60 projects toward the opposite side of the nozzle insertion direction in the closed state of the outside cover 28, and part of the projecting portion 60 is exposed from the filler inlet 24A. In other words, the projecting portion 60 projects in the plate thickness direction of the outside cover 28.

The projecting portion 60 has a cross-sectionally circular shape, and its outer diameter on its projecting distal end portion 60B side is smaller than its outer diameter on its base portion 60A side. A sloping surface 62 that extends from the projecting distal end portion 60B toward the base portion 60A is formed on the projecting portion 60. The sloping surface 62 slopes relative to the nozzle insertion direction. Furthermore, in the present embodiment, the entire surface on the projecting distal end portion 60B side of the projecting portion 60 is formed by the sloping surface 62. Specifically, the projecting distal end portion 60B side of the projecting portion 60 has a substantially conical shape, and the conical surface on the projecting distal end portion 60B side having the substantially conical shape is the sloping surface 62.

Furthermore, the sloping surface 62 of the projecting portion 60 is formed in the section of the projecting portion 60 exposed from the filler inlet 24A. In other words, the sloping surface 62 is formed in the section of the projecting portion 60 located more on the opposite side of the nozzle insertion direction than the filler inlet 24A. It should be noted that, in the present embodiment, the sloping surface 62 is formed more on the opposite side of the nozzle insertion direction than an edge portion 38A of the jutting portion 38.

The projecting distal end portion 60B of the projecting portion 60 is disposed in the central portion of the projecting portion 60 and in the central portion of the filler inlet 24A, as seen from the nozzle insertion direction. Furthermore, in the closed state of the outside cover 28, an interstice between the peripheral wall of the projecting portion 60 and the inner wall of the filler inlet 24A is substantially constant.

Next, the action and effects of the filler structure 20 of the present embodiment will be described.

In the filler structure 20, the projecting portion 60 exposed from the filler inlet 24A is disposed on the outside cover 28, and the sloping surface 62 that extends from the projecting distal end portion 60B toward the base portion 60A and slopes relative to the nozzle insertion direction is formed on the projecting portion 60. Here, if, after fueling, one forgets to close a fuel lid 68 covering the filler inlet 24A, washes the car, and sprayed water W strikes the sloping surface 62 of the projecting portion 60 exposed from the filler inlet 24A, the pressure of the water W in the nozzle insertion direction is dispersed in other directions by the sloping surface 62.

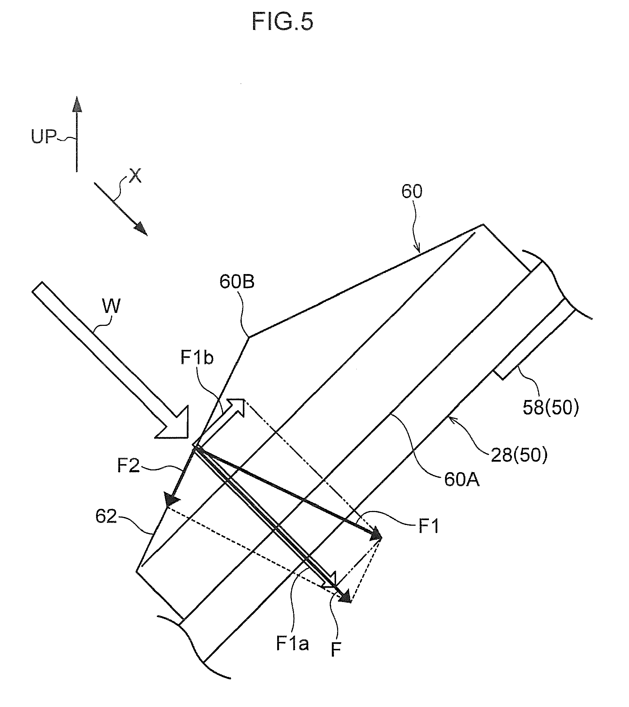

Specifically, as shown in FIG. 5, when the sprayed water W strikes the sloping surface 62 of the projecting portion 60 of the outside cover 28 and the outside cover 28 receives pressure F in the nozzle insertion direction from the water W, the pressure F is dispersed by the sloping surface 62 into a component force F1 in the direction of a right angle to the sloping surface 62 and a component force F2 parallel to the sloping surface 62. The component force F1 can be resolved into a component force F1a in the nozzle insertion direction (the direction in which the outside cover 28 opens) and a component force F1b in the direction of a right angle to the component force F1a (the direction of a right angle to the direction in which the outside cover 28 opens). Here, the component force F1a is smaller than the pressure F that the outside cover 28 receives from the sprayed water W, so it is difficult for the outside cover 28 to be opened. That is, according to the filler structure 20, because the sloping surface 62 is formed on the projecting portion 60, it is difficult for the outside cover 28 to be opened even if the sprayed water W strikes it. Because of this, the sprayed water W can be kept from pushing open the outside cover 28 and entering the filler pipe 24.

Furthermore, in the filler structure 20, because the pressure F that the outside cover 28 receives from the sprayed water W is dispersed by the sloping surface 62, it can be made difficult for the outside cover 28 to be opened, so the spring load of the biasing spring 58 can be set low. Here, for example, if the spring load of the biasing spring 58 is set low, the insertion force when inserting the fuel nozzle 100 can be reduced, so the work of inserting the fuel nozzle 100 into the filler inlet 24A during fueling becomes easy. That is, according to the filler structure 20, a balance can be achieved between the ease with which the fuel nozzle 100 is inserted and the difficulty with which the outside cover 28 is opened when the sprayed water W strikes it.

In the filler structure 20, the entire surface on the projecting distal end portion 60B side of the projecting portion 60 is formed by the sloping surface 62, so it is even more difficult for the outside cover 28 to be opened even if the sprayed water W strikes it.

Furthermore, in the filler structure 20, the sloping surface 62 of the projecting portion 60 is formed in the exposed section of the projecting portion 60, so the sprayed water W can be dispersed outside the filler inlet 24A. Because of this, water ingress from the filler inlet 24A into the filler pipe 24 can be effectively controlled.

Moreover, in the filler structure 20, the projecting distal end portion 60B of the projecting portion 60 is disposed in the central portion of the projecting portion 60 and in the central portion of the filler inlet 24A, as seen from the nozzle insertion direction as shown in FIG. 3, so the sprayed water W can be dispersed substantially evenly along the sloping surface 62 of the projecting portion 60 to the periphery of the filler inlet 24A. Because of this, water ingress from the filler inlet 24A into the filler pipe 24 can be controlled even more.

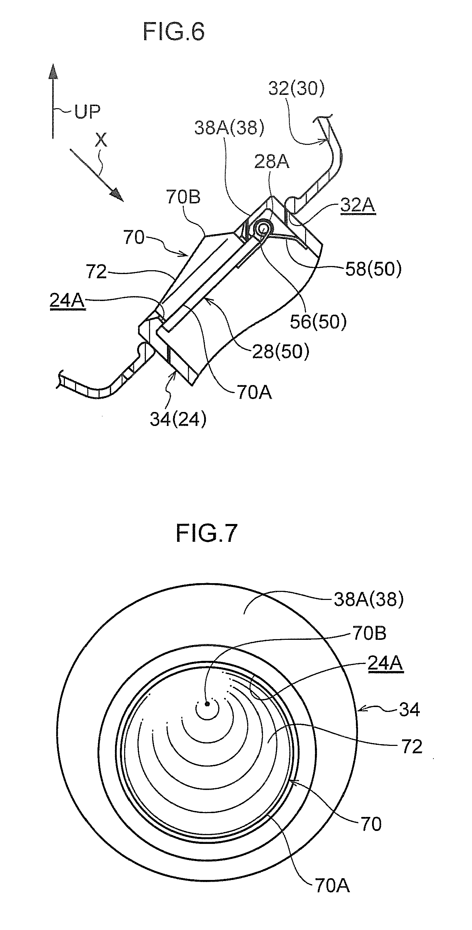

In the preceding embodiment, the filler structure 20 has a configuration where the projecting distal end portion 60B of the projecting portion 60 is disposed in the central portion of the projecting portion 60 and in the central portion of the filler inlet 24A, as seen from the nozzle insertion direction, but the present invention is not limited to this configuration. For example, the filler structure 20 may also have a configuration such as shown in FIG. 6 and FIG. 7, in which a projecting portion 70 has a projecting distal end portion 70B that is disposed offset from the central portion of the projecting portion 70 and offset from the central portion of the filler inlet 24A, as seen from the nozzle insertion direction. It should be noted that reference sign 70A in FIG. 6 and FIG. 7 denotes an example of the base portion of the projecting portion 70 of the present invention, that reference sign 70B denotes an example of the projecting distal end portion of the projecting portion 70 of the present invention, and that reference sign 72 denotes an example of the sloping surface of the present invention. Furthermore, for example, the projecting portion 70 may also have a configuration where the projecting distal end portion 70B is disposed on the base portion 70A. Specifically, the projecting portion 70 may have a configuration where the projecting distal end portion 70B is disposed on a straight line extending from the base portion 70A in the opposite direction of the nozzle insertion direction.

Furthermore, in the preceding embodiment, the projecting distal end portion 60B side of the projecting portion 60 has a substantially conical shape, but the present invention is not limited to this configuration. For example, the projecting distal end portion 60B side of the projecting portion 60 may also have a substantially pyramidal shape. In this case, the sloping surfaces 62 of the projecting portion 60 may be flat surfaces, sloping surfaces curving in a convex manner, or sloping surfaces curving in a concave manner. It should be noted that, from the standpoint of dispersing the nozzle insertion direction pressure of the sprayed water W, it is preferred that the sloping surfaces 62 be curved in a convex manner rather than being curved in a concave manner.

Moreover, in the preceding embodiment, the filler structure 20 has a configuration where the sloping surface 62 of the projecting portion 60 is placed more on the opposite side of the nozzle insertion direction than the filler inlet 24A, but the present invention is not limited to this configuration. For example, a sloping surface 62 that extends from the projecting distal end portion 60B to the base portion 60A may also be formed on the projecting portion 60.

An embodiment of the present invention has been described above, but the present invention is not limited to what has been described above and can of course be modified and implemented in a variety of ways other than those described above without departing from the spirit thereof.

All documents, patent applications, and technical standards mentioned in this specification are incorporated by reference herein to the same extent as if each individual document, patent application, and technical standard were specifically and individually indicated to be incorporated by reference.

## Claims

1. A fuel tank filler structure (20) comprising:
a filler pipe (24) that is equipped with a filler (24A) for receiving which a fuel nozzle (100), the filler pipe being configured to communicate with a fuel tank (22);
an opening and closing valve (50) that is disposed in the filler pipe (24), closes off the filler inlet (24A), and, when pushed by the fuel nozzle (100), opens the filler inlet (24A); and
a projecting portion (60, 70) that is disposed on the opening and closing valve (50), projects toward an opposite side from an insertion direction (X) of the fuel nozzle (100), is exposed from the filler inlet (24A), and is equipped with a sloping surface (62, 72) that extends from a projecting distal end portion (60B, 70B) toward a base portion (60A, 70A) and slopes relative to the insertion direction (X) of the fuel nozzle (100).

2. The fuel tank filler structure (20) according to claim 1, wherein an entire surface on the projecting distal end portion side of the projecting portion (60, 70) is formed by the sloping surface (62, 72).

3. The fuel tank filler structure (20) according to claim 2, wherein the projecting distal end portion (60B) is disposed in a central portion of the projecting portion (60) and in a central portion of the filler inlet (24A), as seen from the insertion direction of the fuel nozzle (100).
